# EUROPEAN PATENT SPECIFICATION

(11) **EP 1 286 627 B1**
(45) Date of publication and mention of the grant of the patent: **26.10.2016**
(21) Application number: 01928843.0
(22) Date of filing: 24.04.2001
(51) Int. Cl.: A61C 7/08

(54) **EMBEDDED FEATURES OF A DENTAL APPLIANCE**
EINGEBUNDENE MERKMALE EINER ZAHNÄRZTLICHEN VORRICHTUNG
CARACTERISTIQUES INCLUSES POUR UN APPAREIL DENTAIRE

(30) Priority: 25.04.2000 US 199649 P; 25.04.2000 US 199650 P; 14.07.2000 US 616222; 14.07.2000 US 616830
(43) Date of publication of application: 05.03.2003
(73) Proprietor: Align Technology, Inc., San Jose, CA 95131 (US)
(72) Inventor: PHAN, Loc, X., Milpitas, CA 95035 (US); CHISHTI, Muhammad, Sunnyvale, CA 94086 (US); MILLER, Ross, J., Sunnyvale, CA 94086 (US); VAN DEN BERG, H., Robert, San Ramon, CA 94583 (US); KUO, Eric, San Francisco, CA 94117 (US); AHN, Jae, Hyun, San Francisco, CA 94132 (US); TRICCA, Robert, E., Danville, CA 94526 (US)
(74) Representative: Grünecker Patent- und Rechtsanwälte PartG mbB
(86) International application number: PCT/US2001/013280
(87) International publication number: WO 2001/080762

(56) References cited:
- EP-A2- 0 988 835
- WO-A-00/01317
- US-A- 4 150 485
- US-A- 4 253 828
- US-A- 4 799 884
- US-A- 5 022 855
- US-A- 5 145 364
- US-A- 5 536 169
- US-A- 5 607 300
- US-A- 5 645 420
- US-A- 5 683 244
- US-A- 5 951 291

## Description

### BACKGROUND OF THE INVENTION

The present invention is related generally to the field of orthodontics. Particularly, this invention relates to the use of removable orthodontic appliances for producing tooth movements. More particularly, this invention relates to improved devices, systems and methods for producing such tooth movements with elastic repositioning appliances.

Orthodontic treatments involve repositioning misaligned teeth and bite configurations for improved cosmetic appearance and dental function. Repositioning teeth is accomplished by applying controlled forces to the teeth over an extended period of time. This is conventionally accomplished by wearing what are commonly referred to as "braces." Braces are typically comprised of brackets or bands which are bonded to the teeth and linked with the use of archwires, ligatures and O-rings. After the archwire is in place, periodic appointments with the orthodontist are required, during which the patient's braces will be adjusted. This involves installing different archwires having different force-inducing properties or by replacing or tightening existing ligatures. Between meetings, the patient may be required to wear supplementary appliances, such as elastic bands or headgear, to supply additional or extraoral forces.

Although conventional braces are effective, they are often a tedious and time consuming process requiring many visits to the orthodontists office. Moreover, from a patient's perspective, they are unsightly and uncomfortable. The archwire and ligatures which connect the brackets in a continuous network make brushing, flossing between the teeth and other dental hygiene procedures difficult, possibly contributing to the development of gingivitis, caries, and other dental disease. Consequently, alternative orthodontic treatments are needed. In particular, it would be desirable to use appliances which can be removed by the patient during daily dental hygiene routines, while participating in athletic activities, or for cosmetic purposes.

A particularly promising approach relies on the use of elastic positioning appliances for realigning teeth. Such appliances comprise a thin shell of elastic material that generally conforms to a patient's teeth but is slightly out of alignment with the initial tooth configuration. Placement of the elastic positioner over the teeth applies controlled forces in specific locations to gradually move the teeth into the new configuration. Repetition of this process with successive appliances comprising new configurations eventually move the teeth through a series of intermediate configurations to a final desired configuration. A full description of an exemplary elastic polymeric positioning appliance is described in U.S. Patent No. 5,975,893, and in published PCT application WO 98/58596 which designates the United States and which is assigned to the assignee of the present invention.

In addition to their ease of use, polymeric positioning appliances are generally transparent, providing an improved cosmetic appearance, and impart substantial force on the teeth, due to stiffness of the appliance. The stiffness of an elastic positioning appliance is a result of the modulus of the thermoformable polymer materials from which it is made. The higher the modulus of the materials, the higher the stiffness of the appliance. By designing the appliance to cover the teeth, a much larger and/or more varied contact surface area may be afforded compared to traditional spring retainers and wire-based appliances. Consequently, more dramatic tooth movements may be achieved.

In some cases, however, orthodontic treatment may involve more complex tooth movements or treatment plans requiring additional devices or accessories. For example, it may be desirable to apply forces to surfaces of the teeth that may not be easily achieved by the appliance alone, either due to the location or characteristics of the surface itself or of the surrounding teeth. Similarly, it may be desirable to apply extraoral forces to some tooth surfaces to achieve certain tooth movements or to control growth and development of the bite and jaws. Likewise, it may be desirable to achieve such control indirectly through soft tissue stretch and muscular activity. Alternatively, it may be preferable to allow the passive eruption and movement of certain teeth, free of applied forces. The devices and accessories commonly utilized for these situations are typically separate removable appliances worn prior to the application of conventional braces, or accessories used in conjunction with conventional braces. Thus, such devices and accessories may not be compatible with the use of elastic polymeric positioning appliances for orthodontic treatment.

Document US4799884, upon which prior art the two-part form of claim 1 is based, discloses a system of removable tooth positioning appliances comprising a wire member molded in the interior of the appliance to assist in maintaining the desired buccal expansion dimension of the appliance.

Consequently, improved methods and apparatus for achieving these treatment objectives are desired for complete orthodontic treatment in such patients. Such devices, systems and methods would maintain the advantages of and be compatible with a removable appliance while providing supplementary features to assist in the improvement of jaw structuring, alignment and tooth repositioning, to name a few. At least some of these objectives will be met by the designs of the present invention described hereinafter.

### SUMMARY OF THE INVENTION

The invention defines a system of removable elastic tooth positioning appliances as defined in claim 1. Preferred embodiments are according to the dependent claims.

The present invention provides improved systems for repositioning teeth from a first orientation to a successive orientation in a series of movements to a final tooth and bite configuration. Such repositioning is based on a system comprising at least one and usually a plurality of three or more elastic repositioning appliances configured to receive the teeth in a cavity and incrementally reposition individual teeth, usually in a series of successive steps. In cases involving more complex movements or treatment plans, it may be desired to utilize additional devices, components or accessories. The present invention provides for the utilization of such devices, components or accessories typically used in conventional or novel orthodontic treatments. In some instances the present invention provides improved elastic repositioning appliances that take the place of such additional accessories. Further, the present invention may provide improved elastic repositioning appliances that provide simultaneous repositioning of tooth and bite configurations that may be unachievable with conventional devices.

In a first aspect of the present invention, a removable elastic positioning appliance, typically used in a series of successive elastic appliances for orthodontic treatment, may be comprised of a polymeric shell having at least one orthodontic component or accessory. Usually and preferably, the orthodontic component will be configured to interact with a "non-tooth" oral surface and/or another orthodontic device. The non-tooth oral surface may be selected from the group consisting of the palate, cheeks, lips, tongue, and gingiva. Usually the interaction will be intended to provide force or anchoring from the non-tooth oral surface to the tooth positioning appliance. Similarly, the orthodontic devices will usually be selected from the group consisting of head gear, elastic bands, ligatures, springs, attachment devices, and elastic repositioning appliance. Such orthodontic devices are usually intended to apply an external force on to the orthodontic component and thus on to the elastic tooth positioning appliances. In this way, forces which could not conveniently be achieved with the tooth positioning appliance by itself can be effected. Such forces in some instances can provide for tooth movements which would otherwise not be possible. The orthodontic components will usually not include anchors, brackets, or other structures which are attached directly to one or more teeth. Thus, the components in the first aspect of the invention will usually not be intended to act as an intermediate member or an interface between the tooth positioning appliance and the tooth itself.

These components or accessories may be independent entities that are embedded in the polymeric shell during production of the appliance. Or, they may be mounted on the polymeric shell with a suitable adhesive in a post-production assembly protocol. In either case, the components may be traditional accessories that are typically used with conventional orthodontic devices, such as braces, or they may be any other readily available components used for dental treatment. Alternatively, the components may be specially created accessories designed for specific purposes when used with removable elastic positioning appliances. Such specially created accessories may be independent entities present on or in the polymeric shell as described above, or they may be formed by the polymeric shell itself. In these cases, the component may be a formed protrusion or shape in the wall of the polymeric shell, providing a variety of advantages, including but not limited to increased stability, safety from breakage, ease of manufacturing, cost savings, shortened treatment time and improved cosmetic appearance and patient compliance.

In a first embodiment, the orthodontic components or accessories may be conventional accessories typically used with fixed, non-removable orthodontic devices. For example, headgear tubes are conventional accessories typically mounted on traditional braces for inserting a headgear device and applying extraoral force to the teeth and jaws. Tubes for receiving headgear may be mounted on or embedded in the polymeric shell of an elastic positioning appliance for a similar effect. Similarly, orthodontic hooks may be mounted on traditional braces to support elastic bands which may also apply distinct forces to the teeth and jaws. As with headgear tubes, such hooks may also be mounted on or embedded in the polymeric shell of a positioning appliance for a similar effect. Likewise, a number of other conventional accessories, such as brackets, springs, bumper tubes, palatal bars, frameworks, pin-and-tube apparatuses and the like, may be used in conjunction with polymeric positioning appliances. In some cases, such as with brackets, the accessory may be used to join a removable elastic appliance with a portion of teeth supporting fixed conventional devices, such as braces.

In a second embodiment, the orthodontic components or accessories may be those which are primarily exclusive to removable appliances. These components are not generally suited for use with fixed appliances and devices due to their bulk and size. In addition, they are often used prior to the use of fixed devices to create a favorable environment for later tooth repositioning. For example, when a patient's teeth are still erupting, a number of devices may be used to foster improved eruption and development of the tooth arrangement and bite configuration. These may include buccal shields, buccinator bows or wire shields, bite plates, palatal expanders and bars, lingual flanges and pads, lip pads or bumpers, and the like. Since these components are currently used with removable appliances, they are ideally suited for use with removable elastic positioning appliances. Thus, the components may be mounted on or embedded in the polymeric shell of an elastic appliance. Similarly, supporting structures for such components may also be mounted or embedded in the polymeric shell for the removable application of a component. For example, a bumper tube may be embedded in the polymeric shell for later insertion and removal of a bumper. Alternatively, the components may be formed by the appliance itself, such components comprising a formed protrusion or shape in the wall of the polymeric shell. In these cases, the elastic repositioning appliance may take the place of any additional accessories.

An added advantage of the use of elastic repositioning appliances having these components or accessories is the ability to provide the conventional benefit of the accessory while simultaneously repositioning the teeth, a combination previously limited. In conventional treatment, the use of fixed devices to reposition the teeth negated the ability of simultaneously using accessories provided by some removable appliances since removable appliances may not be readily applied with fixed devices in place. For example, situations in which it is desired to control eruption of specific teeth concomitant with repositioning of the same or other teeth would cause great difficulty if not an impossible dilemma with traditional devices. The present invention may provide such simultaneous maneuvers which are unachievable with conventional treatment.

In a second aspect of the present invention, a removable dental positioning appliance, typically used in a series of successive elastic appliances for orthodontic treatment, may be comprised of at least one protrusion shaped to be used for an orthodontic function. As described above, such a protrusion may resemble, in form or function, a traditional component or accessory used in conventional orthodontic treatment with fixed, non-removable devices or with removable appliances. For example, an appliance may have a protrusion or shape in the wall of the polymeric shell in the form of a hook for mounting flexible bands, ligatures or adjunct devices. Such a hook may resemble traditional hooks found in dental care, or it may be specially designed for use with elastic repositioning appliances. Likewise, such a protrusion may form a spring which transmits force to one or more teeth to reposition teeth from a first arrangement to a successive arrangement. A spring of this type may be of a traditional design or it may be specially designed for use with elastic repositioning appliances. Further, it may be specially designed to engage an attachment body mounted on a tooth, a device primarily utilized in conjunction with removable elastic appliances. A full description of exemplary attachment bodies and devices is described in published PCT application WO0032132. Thus, in these and similar cases, such as a palatal bar, the protrusion may take the place of a traditional accessory or component, or it may be utilized in a specialized manner.

In one embodiment, the protrusion may contact one or more dental surfaces to assist in holding the elastic appliance in position. For example, one or more protrusions may be sized and located to contact interdental areas of the patient's teeth, often near the gingival margin, when the appliance is properly inserted and positioned. Such protrusions may be formed in the wall of the polymeric shell, or they may be adhered to or embedded into the polymeric shell to protrude from the wall. Such placement of the protrusions may provide additional friction and "grab" in dental regions conducive to this effect. Similarly, a protrusion may be sized and located to contact a tooth along a portion of the gingival margin, with or without contact in the interdental areas. Or, the protrusion may be a continuous protrusion contacting more than one tooth along the gingival margin and the interdental areas. In each of these cases, the contact of the protrusion may assist in holding the appliance in proper position.

In another embodiment, the one or more protrusions may form a bite plate. A bite plate is a device which prevents the teeth from closing completely. By opening the bite in this manner, unopposed teeth may be allowed to passively erupt in a controlled manner to beneficially alter vertical dental relationships. In addition, such an open state or disclusion may relieve teeth which are in crossbite allowing orthodontic forces to correct the crossbite.

To provide anterior disclusion, an elastic positioning appliance may have an increase in thickness of material in the posterior occlusal regions. This increase in thickness may be applied to the appliance or formed by the appliance to create a protrusion over the designated occluding surfaces. Similarly, posterior disclusions may be provided by forming a protrusion which extends at least a portion of an upper palatal region with added thickness. Alternatively, posterior disclusions may be provided by forming a protrusion in an upper lingual or lower facial anterior region. Such protrusions may prevent the front teeth from closing completely, thus discluding the posterior teeth. As previously described, such protrusions may be formed in the appliance or applied to the surface of the appliance.

Such embodiments of the present invention may be utilized in the treatment of patients with a condition commonly termed a "deep bite". In these cases, the lower teeth contact the upper teeth and/or the palate in the natural bite. This occurs when the posterior teeth are not fully erupted in the correct position allowing the anterior teeth to become overclosed or overlap more than is desirable. Such a bite is injurious to the palate, tends to crowd the lower teeth, and affects flaring of the upper teeth leading to upper spaces. This may be alleviated with the use of a bite plate which provides posterior disclusion. Such disclusion allows the posterior teeth to naturally erupt without contacting the opposing teeth which may impede their eruption into the correct position. The present invention may provide the function of a bite plate while additionally providing repositioning forces and other orthodontic treatment to the patient. These functions may be simultaneous, an attribute not previously afforded by conventional orthodontic treatment.

In a third aspect of the present invention, a removable dental positioning appliance, typically used in a series of successive elastic appliances for orthodontic treatment, may be comprised of at least one space filler shaped to align with a gap between adjacent teeth. If a tooth is extracted from a patient's dentition, a space or gap will be left behind between adjacent teeth. A similar gap may also be present due to general misalignment of the teeth. An elastic positioning appliance may be made to be positioned over a gap and its surrounding teeth. In such a case, a space filler may be shaped to align with the gap. In a preferred embodiment, the space filler may be a cavity in the polymer shell having the shape of at least a portion of a tooth, dental feature, sphere, oval or three-dimensional curved and/or flat sided object. In the case of a tooth shape, the space filler may act as a "pontic," a fake tooth placed where a tooth is missing to give the appearance of the presence of a tooth. This same effect may also be given by other shapes. Likewise, as a gap is gradually eliminated due to repositioning of the teeth, a variety of shapes may be suitable throughout the repositioning process.

To further conceal the presence of a space or gap between teeth during orthodontic treatment, a space filler may be opacified. By making the space filler at least partially opaque, it may give a more convincing appearance of the presence of a tooth or dental feature. Such opacity may be an effect of surface treatment of the space filler. For example, the inside and/or outside surfaces of the space filler may be painted with a tooth-colored material. Alternatively, the surfaces may be microetched to give a more frosted appearance to the polymeric shell material. In either case, the space or gap may be less visible.

In addition to improving cosmetic appearance, a space filler may also provide structural support for the elastic appliance. When a space filler is a cavity, as described above, the presence of the cavity improves the structural integrity of the appliance by providing a uniform geometry. Alternatively, a space filler may be any number of structures providing similar support. For example, a space filler may be a structure that is at least partially solid. This may be achieved by the formation of a solid section of material spanning the gap, similar to a bridge or slab between adjacent teeth. Such a solid section may be formed by the fusing of the walls of the polymeric shell together. Alternatively, the shell may be filled with a solid material. In this case, the shell may be designed with undercuts or prongs to retain the solid material. In addition, a solid section may be corrugated to additionally improve the integrity of the appliance.

In a fourth aspect of the present invention, a removable dental positioning appliance, typically used in a series of successive elastic appliances for orthodontic treatment, may be comprised of a polymeric shell having cavities shaped to receive and reposition teeth, wherein one or more cavities has a window to expose at least a portion of a received tooth. Such windows may be portions of the wall of the polymer shell which are removed. When the shell is positioned over the patient's teeth, portions of the teeth beneath the windows may be exposed. Exposing such tooth surfaces may allow brackets, buttons or other orthodontic components to be utilized in conjunction with the elastic appliance or to be exposed for other purposes.

In a preferred embodiment, a polymeric shell may have a plurality of windows over portions of the occlusal surfaces of the teeth. In this case, segments of the shell may still be present along the facial and lingual surfaces of the teeth and across the interdental regions or spaces between the teeth. Exposure of the occlusal surfaces in appropriate size and location may allow interdigitation of the upper and lower teeth. This may also be achieved with the presence of one or a few larger windows over portions of the occlusal surfaces of the teeth. In these cases, segments of the shell may not be present across the interdental regions or spaces between the teeth. In either case, interdigitation of at least portions of the upper and lower teeth may benefit tooth and jaw orientations, leading to improved treatment, appearance, comfort and consequently patient compliance. Likewise, similarly placed windows may provide the benefits offered by a lower elastic modulus, such that the lowest stiffness may be provided by the absence of the material. Such benefits and a full description is provided in co-pending application [Attorney Docket No. 018563-001310], assigned to the assignee of the present invention.

In yet other aspects of the present invention, removable elastic tooth positioning appliances will comprise at least one, and usually a plurality of polymeric shells which are shaped to be placed over and conform to teeth such that the exterior of the shell, i.e., the surface which is remote from the teeth when the appliance is placed over the teeth, mimics the shape of the teeth. In contrast to the prior appliance descriptions, in the present aspect of the present invention, it is desired that the shell be at least partially opacified, often being completely opacified. By "opacified," it is meant that the appliance will be opaque so that the teeth beneath the appliance are not visible, at least on the surfaces which would be apparent by persons looking at the user who wears the appliance. Thus, in some cases, only a single tooth of the appliance may be opacified to conceal the absence of a missing tooth therebeneath. In other cases, at least the six front teeth of the appliance are opacified to hide the teeth therebeneath, often being eight front teeth, and sometimes being ten front teeth. By opacifing the front teeth, those teeth which are most likely to be visible will be covered.

Usually, the opacification will be achieved by coloring the appliance with a tooth-colored material and/or forming the appliance from a tooth-colored material. In other instances, however, it may be desirable to color the appliance in non-tooth colors and in other instances to use multiple tooth and/or non-tooth colors on the same appliance. It will be appreciated that in addition to coloring, pattern of shades and/or colors could be provided on a single appliance.

In a particular aspect of the coloring methods, a removable elastic appliance comprising a shell which conforms to a patient's teeth is provided. In addition, a plurality of coating materials are provided to a user, who may be the patient. The user can then select which of the colored coating materials the user desires to coat at least a portion of the appliance with. Optionally, kits may be provided including the appliance(s), plurality of coating materials having different colors, and means for applying the selected coating materials to the removable appliance, such as paint brushes, dipping trays, spray cans, or other applicators for applying the coating to the appliance. In some instances, the colors will be a variety of shades of tooth colors, permitting the user to most closely match the patient's natural tooth color. Preferably, the kits will contain multiple removable elastic appliances for effecting tooth positioning as described above.

The present disclosure further comprises methods for fabricating pre-colored removable elastic tooth positioning appliances, which do not form part of the invention. First, a desired color is determined. Typically, the desired color is determined by the patient or other user and transmitted to the manufacturer. The manufacturer then selects a material from which to fabricate the appliance having the desired color. The appliance is then molded from the selected material. Frequently, determining the desired color may comprise matching the patient's native tooth color to a color chart and selecting the color which most closely matches the tooth color. Alternatively, the patient or other user may select one or more colors from a group of colors which do not match natural or native tooth colors.

### BRIEF DESCRIPTION OF THE DRAWINGS

Fig. 1 is a perspective illustration a variety of orthodontic components or accessories typically used with fixed orthodontic devices mounted on or embedded in the polymeric shell of a removable elastic repositioning appliance.
Fig. 2 is a perspective illustration of a typical transpalatal arch bar mounted on or embedded in the polymeric shell of an appliance.
Fig. 3 is a perspective illustration an appliance having a lip pad.
Fig. 4 is a perspective illustration of an appliance having a buccal shield.
Fig. 5 is a perspective illustration of an appliance having buccinator bow.
Fig. 6 is a perspective illustration of an appliance having lingual pad.
Fig. 7 is a perspective illustration of appliances joined by frameworks used in Herbst Appliances.
Fig. 8 is a perspective illustration of appliances joined by frameworks used in Jasper Jumpers.
Fig. 9 illustrates of an appliance having a protrusion formed in the polymeric shell in the shape of a hook.
Figs. 10A and 10B illustrate steps of producing a protrusion depicted in Fig. 9.
Fig. 11 illustrates an appliance having a protrusion formed in the polymeric shell in the shape of a spring.
Fig. 12 is a perspective illustration of an appliance having a protrusion in the polymeric shell to form a transpalatal bar.
Fig. 13 is a perspective illustration of an appliance having a corrugated protrusion in the polymeric shell to form a transpalatal bar.
Fig. 14A is a side view of a patient's teeth showing the placement of protruding divots contacting interdental areas, and Fig. 14B is a perspective illustration of a portion of an appliance having such divots.
Fig. 15A is a perspective illustration of a portion of an appliance having a continuous protrusion along the gingival line, and Fig. 15B is a cross-sectional view of a tooth having such an appliance in place.
Fig. 16 is a side view of a posterior portion of an appliance illustrating an increase in thickness of material to form a bite plate.
Fig. 17 is a perspective illustration of an appliance having a protrusion of an upper palatal region to form a bite plate.
Fig. 18A and 18B are cross-sectional views of appliances having protrusions in an upper lingual and lower facial anterior regions, respectively, to form bite plates.
Fig. 19 illustrates a patient having a gap between adjacent teeth.
Fig. 20 is a perspective illustration of an appliance having a space filler cavity in the shape of a tooth placed over the patient's dentition illustrated in Fig. 19.
Fig. 21 is a perspective illustration of an appliance having a space filling structure formed between two cavities in the polymeric shell.
Fig. 22 is a perspective illustration of an appliance having a space filling corrugated structure formed between two cavities in the polymeric shell.
Fig. 23A illustrates an unwanted disclusion due to thickness of the appliance along the occlusional surfaces. Fig. 23B illustrates the elimination of the disclusion of Fig. 23A by eliminating material along the occlusional surfaces. Fig. 23C illustrates a preferred embodiment of an appliance with portions of the occlusional surfaces eliminated.
Fig. 24A illustrates a release tab embedded in the polymeric shell of an appliance. Fig. 24B illustrates a preferred embodiment of an appliance with release tabs encircling areas of occlusional surfaces of the appliance.
Fig. 25 illustrates a kit according to the present invention including a plurality of appliances, a multiplicity of colored coating materials, and a kit container.

### DESCRIPTION OF THE SPECIFIC EMBODIMENTS

Traditional orthodontic treatment often involves the use of basic repositioning devices, such as braces, and the use of supplementary devices, components or accessories to achieve desired end results. As previously described, such supplementary components may be mounted on fixed, non-removable devices or they may be part of a removable appliance typically worn prior to the application of the fixed devices. As with traditional treatment, it may be desired to utilize similar supplementary components when repositioning teeth with removable elastic repositioning appliances. Due to the nature of elastic appliances, such components may take a variety of forms ranging from readily available traditional accessories to specially created devices, as will be described below.

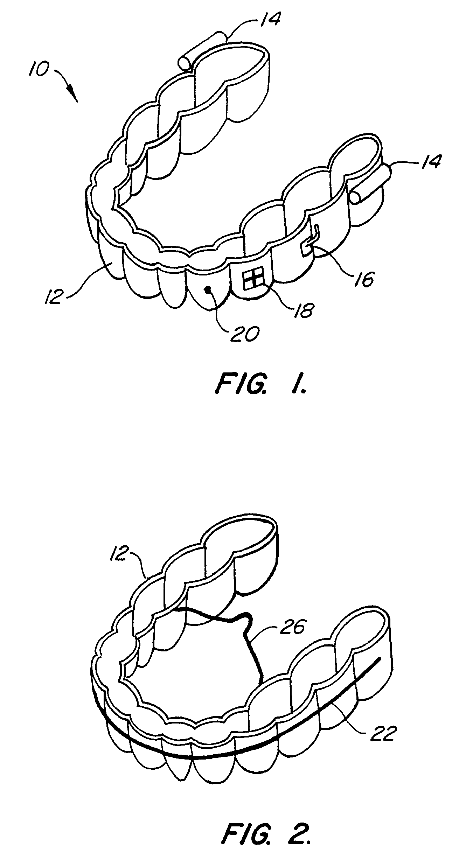

Referring to Fig. 1, a variety of orthodontic components or accessories typically used with fixed orthodontic devices, such as braces, are shown in conjunction with a removable elastic positioning appliance 10. The majority of these accessories may be readily available since they are typically used with conventional treatment. They are also typically mounted on fixed devices, so they are available as separate individual components. As previously described, these components may be embedded in the polymeric shell 12 of an elastic repositioning appliance 10 during production or they may be mounted on the shell 12 in a post-production assembly. One such type of component is a tube 14 which is used in pairs to mount a headgear appliance. Headgear appliances are typically mounted on opposite posterior molars of the upper jaw for a number of purposes, including keeping the upper jaw from growing, pulling the upper teeth backward, and pulling the upper jaw and teeth upward and backward so that they align with the lower jaw and teeth. Therefore, tubes 14 for receiving headgear may be mounted on the buccal surfaces of the polymeric shell 12 covering the posterior molars. The distal ends of the headgear which enter the oral cavity may then be inserted into the tubes 14 to apply extra oral forces to the teeth and jaw. Other components may include hooks 16, primarily used for mounting elastic bands, brackets 18, used for mounting additional components and accessories or possibly for interconnection with fixed brackets or devices, and buttons 20, primarily used as an attachment point for various purposes. It may be appreciated that such components have been shown on the same appliance 10 for illustrative purposes, however typical use may involve one or a few of such components with varying arrangements.

Referring to Fig. 2, an additional component which may be mounted on or embedded in a polymeric shell 12 is a transpalatal arch bar 26. Such palatal bars typically span the palate and are fixed at both ends to permanent devices mounted on opposing molars. This is often used to stabilize and maintain positioning after active arch expansion. In the case of an elastic repositioning appliance 10, the conventional arch bar 26 may be positioned in a similar location, attached at both ends to the polymeric shell covering the lingual surfaces of opposing upper molars. In addition, a low hanging transpalatal bar for control of vertical dimension may be used. Also shown in Fig. 2, one or more wires 22 may be mounted on or embedded in the polymeric shell 12. Such wires 22 may span the majority of the arch, as in the case of a conventional archwire, as shown. Or, such wires 22 may span only portions of the arch, may be present on or within the facial and/or lingual surfaces of the shell, may be multiple in number at a given location, and may be curved, straight or a combination of these, to name a few. The presence of such a wire 22 may be used most commonly for structural reinforcement but may also be used to aid in the application of orthodontic repositioning forces. Again, it may be appreciated that such components have been shown on the same appliance 10 for illustrative purposes, however typical use may involve one or a few of such components with varying arrangements.

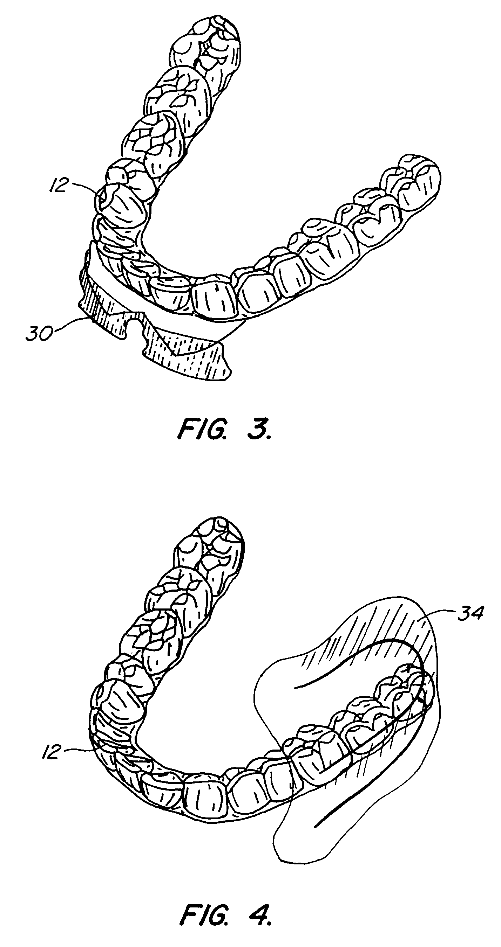

Figs. 3-8 illustrate the use of a variety of orthodontic components or accessories which are typically used with removable functional appliances. These components are not generally suited for use with fixed appliances and devices due to their bulk and size. However, they may be readily used with removable elastic repositioning appliances. In most functional appliances, flanges are used to provide the stimulus to posture the mandible to a new position. Growth modification is most effective if the patient uses his or her own musculature to posture the mandible forward, as opposed to the mandible being held forward by external pressure while the patient relaxes. Thus, the key to mandibular repositioning is the contact of the pad or flange with soft tissue. Such pads or flanges may be mounted or embedded in elastic repositioning appliances. Referring to Fig. 3, a lip pad 30 may be positioned on the polymeric shell 12 so that it is low in the vestibule, holding the lips away from the teeth and forcing the lips to stretch to form an oral seal. This forces the lip musculature to stretch during function, presumably improving the tonicity of the lips and perhaps promoting some soft tissue remodeling that would contribute to stability of changes in incisor position.

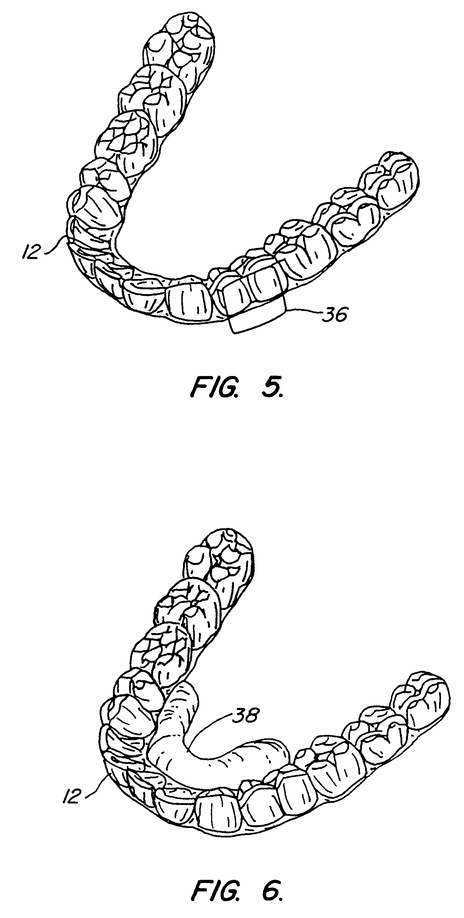

Referring to Figs. 4 and 5, plastic buccal shields 34 and wire buccinator bows 36 may be mounted on or embedded in the polymer shell 12 to hold the soft tissues away from the teeth. A buccal shield 34 or bow 36 may be positioned on the buccal surface of the polymeric shell 12 to lie between the teeth and the cheek. The buccal shield 34 is most useful to hold the cheek away from the dentition to facilitate posterior dental expansion by disrupting the tongue-cheek equilibrium. This in turn leads to facial movement of the teeth and arch expansion. A combination of lip pads 30 and buccal shields 34 will result in an increase in arch circumference as well. It may be appreciated that similar shields may be mounted on the lingual surface of the polymeric shell to remove the resting tongue from between the teeth. This has the effect of enhancing tooth eruption in designated areas. In addition, a lingual pad or flange 38 may be positioned on the lingual surfaces of the polymeric shell 12 covering the lower anterior teeth, as shown in Fig. 6. The lingual pad 38 determines the anteroposterior and vertical mandibular posture for most functional appliances. Such pads 38 may not only position the mandible forward but also exert a protrusive effect on the mandibular incisors when the mandible attempts to return to its original position.

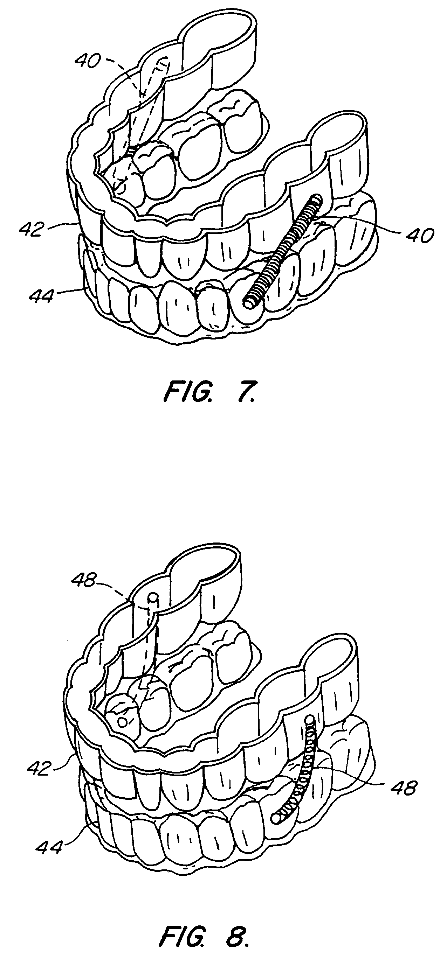

Referring to Figs. 7 and 8, a number of components and accessories may be removably or fixedly attached to both an upper and lower elastic positioning appliance. Components commonly used in this arrangement are frameworks used in Herbst Appliances and Jasper Jumpers. Herbst Appliances are devices in which the maxillary and mandibular arches are splinted with frameworks that are connected with a pin-and-tube device that holds the mandible forward. When used with elastic repositioning appliances, Fig. 7, the pin-and-tube apparatus 40 may be mounted on the buccal surfaces of the upper polymeric shell 42 and lower polymeric shell 44 as shown. The Jasper Jumper functions in a similar manner as the maxillary and mandibular arches are splinted with frameworks that are connected with a spring covered by a plastic sheath. When used with elastic repositioning appliances, Fig. 8, the sheath covered spring 48 may be mounted in a similar manner as shown.

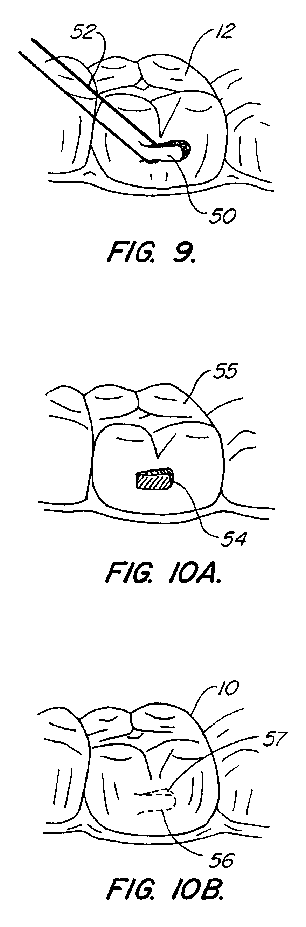

As an alternative to mounting or embedding conventional orthodontic components on an elastic repositioning device, protrusions or other shapes may be formed in the polymeric shell of the device to be used for orthodontic functions. For example, referring to Fig. 9, a hook 50 may be formed in the polymeric shell 12 of an elastic repositioning appliance 10 for use in mounting a flexible band 52. Such a hook 50 may resemble traditional hooks found in dental care, or it may be specially designed for use with elastic repositioning appliances. The embodiment illustrated in Fig. 9 may be produced by a series of production steps. First, a mold of the dentition is produced by any method. Second, Fig. 10A, a wedge or similar protruding mass 54 is then mounted on the mold 55 in the location desired for the resulting hook. It may be appreciated that such a protruding mass 54 may be formed in the original mold 55 by a variety of methods, particularly in the case of computer-guided production methods. Next, a polymeric sheet is thermoformed over the mold 55 to form the appliance 10. The appliance 10 may then be trimmed along the dashed line 56, Fig. 10B, and the polymeric material removed from the joining area 57 to create a hook 50 shown in Fig. 9.

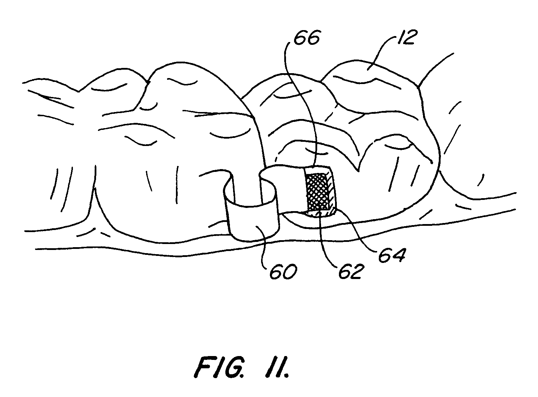

In another embodiment, shown in Fig. 11, a spring 60 may be formed in the polymeric shell 12 of an elastic repositioning appliance 10 for use in transmitting repositioning force to one or more teeth. Such a spring 60 may resemble traditional springs found in dental care, or it may be specially designed for use with elastic repositioning appliances. In this example, the spring 60 is comprised of a pre-formed strip or portion of the polymeric shell 12 which engages an attachment body 62 mounted on an underlying tooth 64. The attachment body 62 is accessible through a window 66 in the appliance 10.

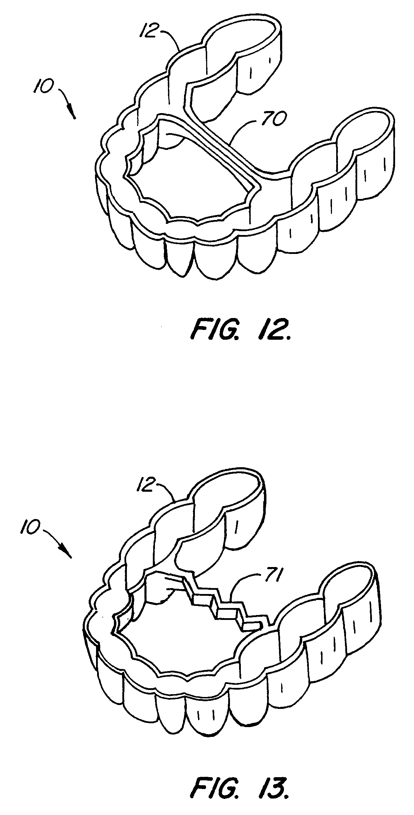

In further embodiments, larger protrusions may also be formed in the polymeric shell to provide additional support for the appliance and/or to provide orthodontic functions. Such a protrusion may form a palatal bar 70, as shown in Fig. 12. Here, a palatal bar 70 is formed in the polymeric shell 12 itself. In addition, a variety of palatal bars may be formed in the shell, such as a low hanging transpalatal bar for control of vertical dimension. These may provide orthodontic functions as described above in relation to conventional palatal bars, and they may also provide support for the appliance 10. This may be particularly useful in highly flexible appliances. For increased support of the construction, the protrusion may be a corrugated palatal bar 71, as shown in Fig. 13.

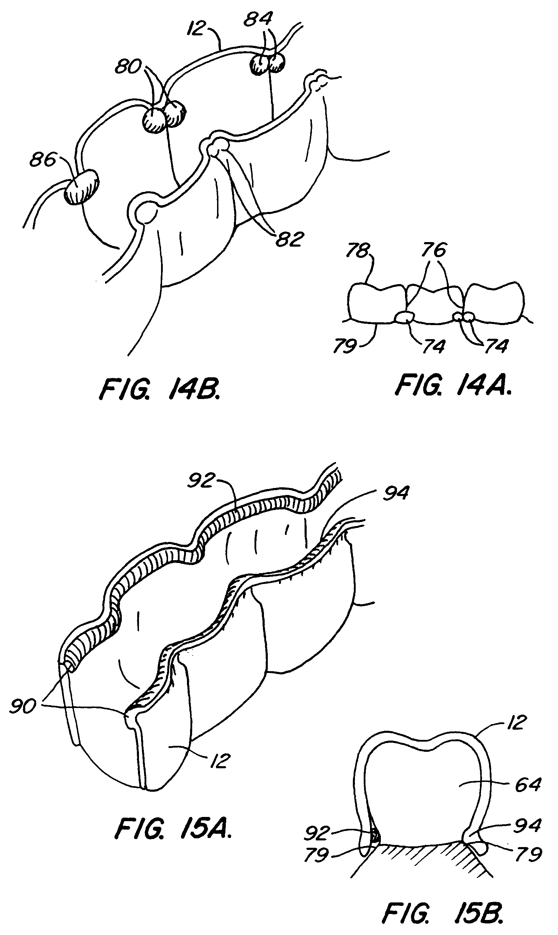

In still further embodiments, protrusions in an elastic repositioning appliance may assist in holding the elastic appliance in place when it is properly inserted and positioned. Such protrusions may be divots 74 sized and located to contact interdental areas 76 of the patient's teeth 78, often near the gingival margin 79 as shown in Fig. 14A. Such placement may provide additional friction and "grab" in dental regions conducive to this effect. Such divots 74 may be most visible by viewing the hollow cavities of the appliance 10, as shown in Fig. 14B. These protrusions may be solid divots 80 adhered to or embedded in the polymeric shell 12 to inwardly protrude from the wall. Alternatively, the protrusions may be formed divots 82 in the wall of the polymeric shell 12 so that essentially the wall protrudes inwardly in these areas. As shown, the divots may be of any shape, number and configuration, including paired divots 84 and single divots 86 as shown.

Similarly, these protrusions may be a continuous protrusion contacting more than one tooth along the gingival margin and the interdental areas. This is illustrated in Fig. 15A as a continuous protrusion 90 is shown along the edges of the hollow cavities of the appliance. This may be a solid protrusion 92 adhered to or embedded in the polymeric shell 12 to inwardly protrude from the wall, or it may be a formed protrusion 94 in the wall of the polymeric shell 12 so that essentially the wall protrudes inwardly in these areas. When the appliance is positioned over the teeth, such a protrusion 90 may fit in the undercut of the tooth 64 along the gingival margin 79, as shown in Fig. 15B. Here a solid protrusion 92 and a formed protrusion 94 are shown in cross-section. Such positioning along the undercut of the teeth may assist in holding the appliance in place. It may be appreciated that such a protrusions may be sized, formed and located in any combination within the polymer shell so as to assist in holding the appliance in a desired position.

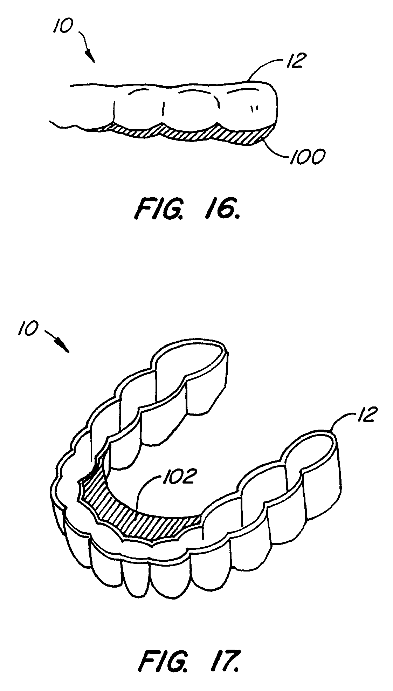

In another embodiment, the one or more protrusions may form a bite plate. A bite plate is a device which prevents the teeth from closing completely. The resulting open state, or disclusion, may be useful for a number of orthodontic treatments, including crossbite correction and controlled passive eruption. To provide anterior disclusion, an elastic positioning appliance 10 may have an increase in thickness of material 100 in the posterior occlusion regions of the polymeric shell 12, as shown in Fig. 16. The increase in thickness of material 100 may be applied to the appliance 10 or formed by the appliance 10 to create a protrusion over the designated occluding surfaces. Similarly, as shown in Fig. 17, posterior disclusions may be provided by forming a protrusion 102 in the polymer shell 12 which extends at least a portion of an upper palatal region with added thickness. This protrusion may be formed in the appliance 10 or applied to the surface of the appliance 10.

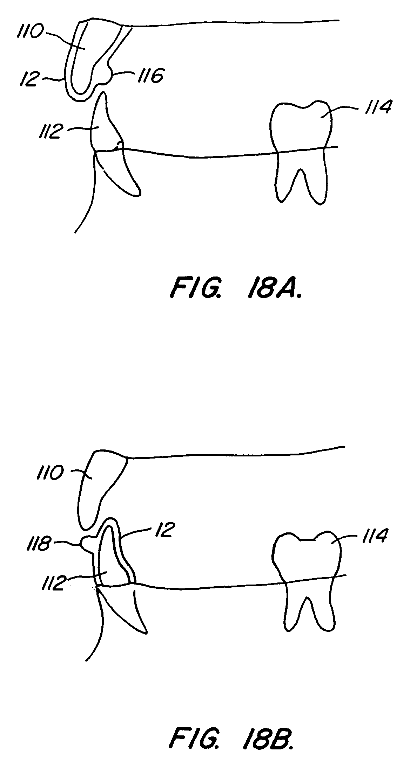

Alternatively, posterior disclusions may be provided by forming a protrusion in an upper lingual or lower facial anterior region, as depicted in Figs. 18A and 18B. Here, the bite is shown in cross-section, with an upper incisor 110 overlapping a lower incisor 112 and a molar 114 positioned for reference. In Fig. 18A, the polymeric shell 12 of an elastic positioning appliance 10 is shown covering the upper incisor 110. On the lingual surface of the shell 12, a protrusion 116 is shown which may contact the lower incisor 112 during biting, thus acting like a bite plate. This protrusion 116 may be formed into the polymeric shell 12 or applied along the lingual surfaces of the appliance 10. Such an arrangement may thus provide posterior disclusions. Similarly, the polymeric shell 12 may cover the lower incisor 112, as shown in Fig. 18B. In this case, a protrusion 118 on the facial surface of the shell 12 is shown which may contact the upper incisor 110 during biting. Again, this protrusion 118 may be formed into the polymeric shell 12 or applied along the facial surfaces of the appliance 10. This arrangement may also provide posterior disclusions.

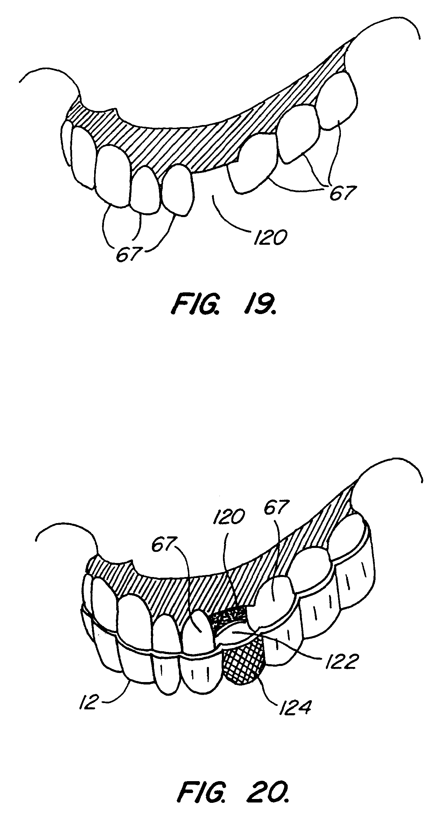

Referring to Fig. 19, many patient's dentition present a gap 120 or space between adjacent teeth 67. Such a gap 120 may be the size of a tooth 67, as may be the case when a tooth is extracted, or the gap 120 may be larger or smaller than the size of a typical tooth 67, as is often the case due to general misalignment of the teeth. In either case, an elastic positioning appliance 10 may be made to be positioned over the gap 120 and the surrounding teeth 67 with a space filler aligning with the gap 120. In a preferred embodiment, shown in Fig. 20, the space filler may be a cavity 122 in the polymer shell 12 having the shape of a tooth. Thus, the space filler may act as a "pontic", a fake tooth placed where a tooth is missing to give the appearance of the presence of a tooth. Likewise, such a cavity 122 may have the shape of any portion of a tooth, dental feature, sphere, oval or three-dimensional curved and/or flat sided object for any desired effect. To further conceal the presence of a space or gap 120 between teeth 67 during orthodontic treatment, the space filler may be opacified, as depicted by shading 124 in Fig. 20.

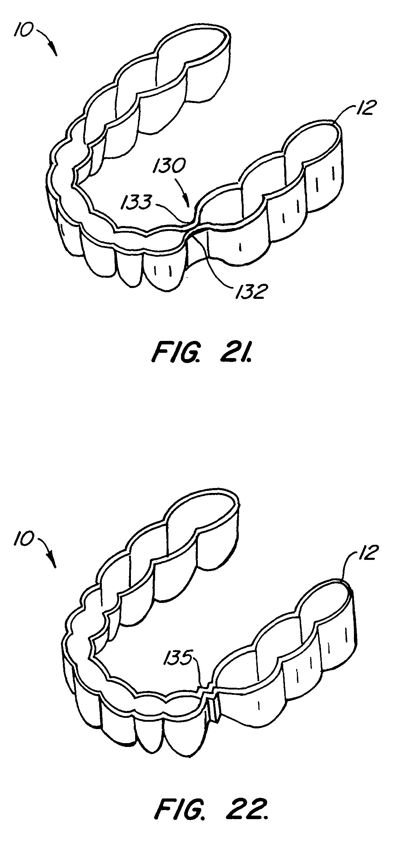

In addition to improving cosmetic appearance, a space filler may also provide structural support for the elastic appliance. When a space filler is a cavity, as described above, the presence of the cavity improves the structural integrity of the appliance by providing a uniform geometry. Alternatively, a space filler may be any number of structures providing similar support. According to the invention and as shown in Fig. 21, the space filler is a structure 130 formed between two cavities in the polymeric shell 12 of an appliance 10. The structure 130 is comprised of the facial wall 132 and lingual wall 133 of the polymeric shell 12 fusing together to form an at least partially solid slab or bridge. In addition, suitable fillers or reinforcements may be used in the fusing or similar process for added support. Likewise, a corrugated structure 135 may be formed between the cavities, as shown in Fig. 22. Such corrugation may further reinforce the structure for added support. In any case, a designated cavity 122 or structure 130, 135 in the polymeric shell 12 may be designed to align with a gap 120 between adjacent teeth 67 when the appliance 10 positioned over the patient's teeth for improved cosmetic appearance and/or structural support.

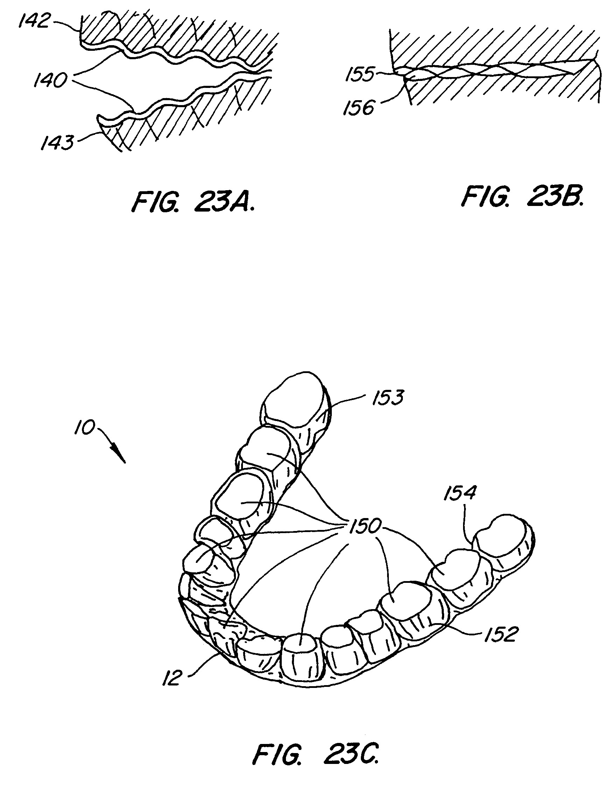

Although forming protrusions or adding additional material to elastic repositioning appliances may provide useful features in orthodontic treatment, it may also be beneficial to remove material or form windows in an appliance. Referring to Fig. 23A, if the occlusional surfaces 140 of an upper appliance 142 and a lower appliance 143 are relatively thick, simultaneous wearing of the appliances 142, 143 may provide unwanted disclusion of the teeth. For example, when closing the jaws, the double layer of occlusional surfaces 140 between the jaws may cause the posterior teeth to prematurely contact, thus preventing the anterior teeth to suitably close. This may be avoided by reducing or eliminating the occlusional surfaces of the appliances, as shown in Figs. 23B and 23C. In a preferred embodiment, shown in Fig. 23C, a polymeric shell 12 of an appliance 10 may have a plurality of windows 150 in the portions which cover the occlusal surfaces of the teeth. In this example, segments of the shell 12 are still present along the facial surfaces 152 and lingual surfaces 153 of the appliance 10 and across the interdental regions 154 or spaces between the teeth. When such an appliance is placed over the upper teeth 155 and lower teeth 156, the teeth may interdigitate, as shown in Fig. 23B. Interdigitation of at least portions of the upper and lower teeth may benefit tooth and jaw orientations, leading to improved treatment, appearance, comfort and consequently patient compliance.

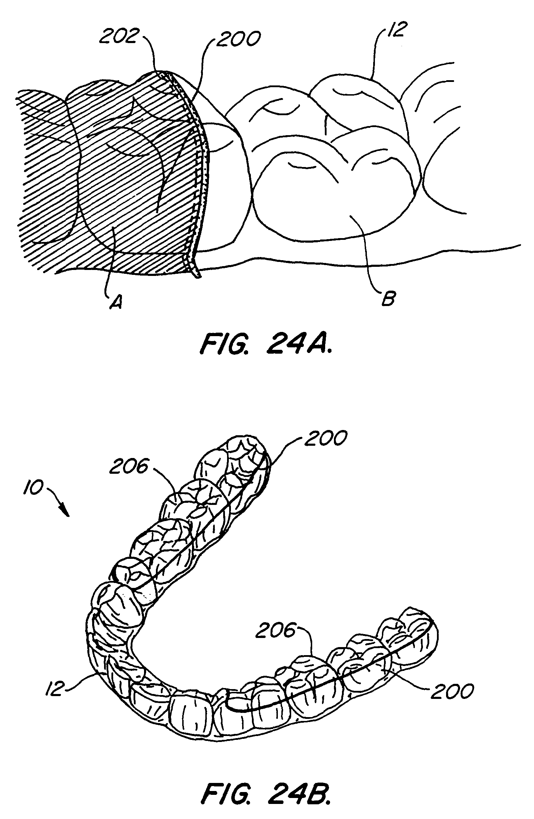

Removal of material may be aided by the use of a release tab 200, as shown in Figs. 24A and 24B. A release tab 200 may be used to remove a layer of material from the polymeric shell 12 or to remove an entire portion of the shell 12, such as to either create a window, as described above, or to eliminate the shell 12 from covering specific teeth or portions of the patient's teeth. Referring to Fig. 24A, a release tab 200 may be embedded in the polymeric shell 12 along a line 202 for future separation between portion A (shaded) and portion B. Although such a line 202 is depicted as a dashed line adjacent to the tab 200 edge, such a line 202 may lie directly over the tab or in any close relation to the tab 202. In the case of a polymeric shell 12 comprised of multiple layers of material, the tab 200 may be embedded between the layers with a portion exposed for grasping. By grasping the tab 200 and pulling the tab 200 along its length, one or more layers of material may be released along a line 202 of separation and removed from the shell 12. In this example, the result may be portion A comprising two layers of material and portion B comprising only one. Alternatively, the result may be portion A comprising one or more layers and portion B removed entirely. Other combinations or examples are possible. Such alterations may be beneficial for patient comfort, ease of use, or obtainment of orthodontic repositioning goals, to name a few. Fig. 24B illustrates a preferred embodiment of placement of such a release tab 200 in a polymeric shell 12 of an elastic repositioning appliance 10. The tab 200 may be placed to encircle areas 206 of the occlusional surfaces of the appliance 10. Thus, the orthodontic treatment of a patient may allow material in these areas 206 of an appliance 10 for a given duration of the treatment plan. At a given point in the treatment, the orthodontic practitioner may prefer to remove a layer of material or the material entirely in these areas 206 during a patient office visit. The practitioner may perform such a removal by pulling on the appropriate release tabs 200 as described above. This may thus reduce time and cost of patient treatment.

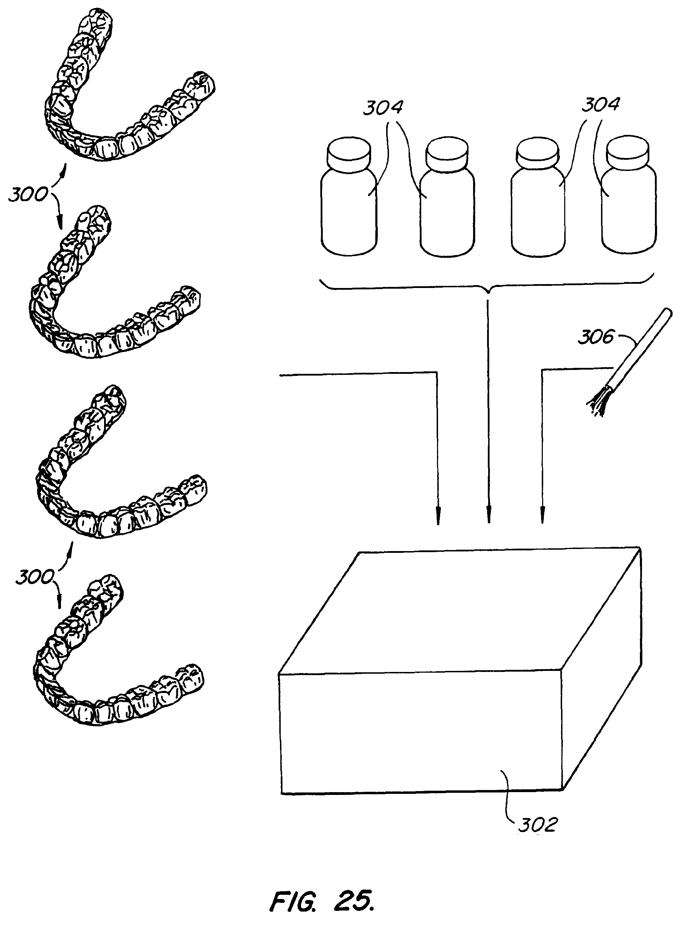

The appliances of the present invention may desirably be opacified or colored for a number of purposes. For example, as discussed above, it may be desirable to opacify or color a portion of a polymeric shell appliance in order to hide a missing tooth, teeth, or tooth defect(s) beneath the appliance during the course of treatment. Optionally, several teeth, such as the front teeth, or the entire appliance can be colored in order to achieve a cosmetic effect. While it will usually be desirable to color the appliance in a tooth-colored hue, there may be instances where a patient wishes to color in a non-tooth color, combination of colors, or the like. Colored appliances may be fabricated from a colored starting material, typically a colored sheet of the polymeric material which is later molded into the appliance. Alternatively, the appliance may be painted, coated, or otherwise covered with a colored coating material (e.g., paint) after it has been formed. Such a coating material should, of course, be non-toxic and suitable for a long-term placement in the oral environment. These coatings may be applied at the time of fabrication, or thereafter by a user or patient, by a variety of conventional techniques, such as painting, spraying, dipping, or the like. Conveniently, clear or neutrally colored aligners may be provided in kits together with a number of coating materials having different colors. As illustrated in Fig. 25, appliances 300 may be packaged together in a box, tray, pouch, or other conventional container 302 together with a plurality of vials or other receptacles 304 containing colored coating materials and a brush 306 or other suitable applicator. In this way, the patient or other user can apply the colored coating material to the appliances 300 as desired at or before the time of use.

Although the forgoing invention has been described in some detail by way of illustration and example, for purposes of clarity of understanding, it will be obvious that various alternatives, modifications and equivalents may be used and the above description should not be taken as limiting in scope of the invention which is defined by the appended claims.

## Claims

1. A system of removable elastic tooth positioning appliances (10) directly mountable in use, on a set of teeth, said system comprising: a plurality of polymeric shell appliances, at least some of which include at least one orthodontic component (14, 16, 18, 20, 22, 30, 34, 36, 40, 48, 50, 60, 70, 71, 80, 82, 84, 90, 92) formed in or integrally with a wall of the shell appliance; wherein each appliance (10) is shaped to receive and reposition teeth from a first orientation to a successive orientation and the component (14, 16, 18, 20, 22, 30, 34, 36, 40, 48, 50, 60, 70, 71, 80, 82, 84, 90, 92) formed in or by a wall of the shell appliance is shaped to interact with a soft tissue surface or an orthodontic device; at least one of the appliances (10) including a polymeric shell (12) including cavities shaped to receive and reposition teeth from a first orientation to a successive orientation and further including at least one space filler shaped to align with a gap (120) between adjacent said teeth; **characterized in that** the space filler is a structure (130, 135) formed between two cavities in the polymeric shell; and the space filler is comprised of a facial wall (132) and a lingual wall (133) of the polymeric shell (12) being fused together forming an at least partially solid bridge.

2. A system as claimed in claim 1 wherein said orthodontic component is selected from the group of tubes (14), lip pads (30) or bumpers, buccal shields (34), buccinator bows (36) or wire shields, brackets (18), hooks (50), buttons (20), springs (60), palatal bars (70), frameworks, pin-and-tube apparatuses (40) and sheath covered springs (48).

3. A system as claimed in claim 1 wherein said soft tissue surface is selected from the group of: the palate, cheeks, lips, tongue, and gingiva.

4. A system as claimed in claim 1, wherein the orthodontic component formed in or integrally with a wall of the shell forms a portion of a wall of the shell.

5. A system as claimed in claim 1, wherein the orthodontic component formed in or integrally with a wall of the shell protrudes from an external surface of the shell.

6. A system as claimed in claim 1, wherein the orthodontic component formed in or integrally with a wall of the shell is integral with the shell.

7. A system as claimed in claim 1, wherein the orthodontic component formed in or integrally with a wall of the shell is adapted to couple to an orthodontic device selected from the group of headgears, elastic bands, ligatures, springs, brackets, attachment devices and elastic repositioning appliances.

8. A system as claimed in claim 1, wherein the integral orthodontic component comprises a posterior protrusion, said posterior protrusion comprising an increase in thickness of the shell along a posterior direction in a posterior occlusal region, said posterior protrusion, in use, being positioned by the removable positioning appliance over occluding surfaces of the posterior teeth to provide anterior disclusion.

9. A system as claimed in claim 1, wherein the orthodontic component formed in or integrally with a wall of the shell is adapted to transmit force to one or more teeth to help reposition said teeth from a first arrangement to a successive arrangement.

10. A system as claimed in any one of the previous claims, wherein the system comprises at least three elastic repositioning appliances.

11. A system in claim 1, wherein a space filler is a cavity (122) in the shape of an at least a portion of a tooth, dental feature, sphere, oval, or three-dimensional curved and/or flat-sided object.

12. A system as in claim 11, wherein the space filler is at least partially opaque.

13. A system as in claim 12, wherein the opacity is an effect of surface treatment of the space filler.

14. A system as in claim 1, wherein the structure (135) is corrugated.

15. A system as claimed in claim 1 wherein each of said removable dental positioning appliance comprises:
a plurality of polymeric shells including cavities shaped to receive and reposition teeth from a first orientation to a successive orientation, and wherein at least some of the
shells have at least one window (150) to expose at least a portion of an occlusal surface of a
received tooth.

16. A system as in claim 15, wherein the shells have a plurality of windows (150) which are sized to allow interdigitation of upper and lower teeth.

## Patentansprüche

1. Ein System von herausnehmbaren, elastischen Zahnpositionierungsvorrichtungen (10), die, in Verwendung, direkt an einem Satz von Zähnen anbringbar sind, das System umfassend: eine Vielzahl von Polymerschalenvorrichtungen, von denen wenigstens einige wenigstens eine orthodontische Komponente (14,16, 18, 20, 22, 30,34, 36,40, 48,50, 60,70, 71,80, 82,84, 90, 92) umfassen, die in oder integral mit einer Wand der Schalenvorrichtung gebildet ist;
wobei jede Vorrichtung (10) geformt ist, um Zähne aufzunehmen und von einer ersten Anordnung zu einer nachfolgenden Anordnung zu repositionieren und die Komponente (14,16, 18, 20, 22, 30,34, 36,40, 48,50, 60,70, 71,80, 82,84, 90, 92), die in oder integral mit einer Wand der Schalenvorrichtung gebildet ist, geformt ist, um mit einer Oberfläche von weichem Gewebe oder einem zahnmedizinischen Gerät zu interagieren;
wenigstens eine der Vorrichtungen (10), umfassend eine Polymerschale (12) umfassend Kavitäten, die geformt sind, um Zähne aufzunehmen und von einer ersten Anordnung zu einer nachfolgenden Anordnung zu repositionieren und weiterhin umfassend wenigstens einen Lückenfüller, der geformt ist, um mit einer Lücke (120) zwischen benachbarten von Zähnen zu fluchten;
charakterisiert dadurch, dass der Lückenfüller eine Struktur (130,135), die zwischen zwei Kavitäten in der Polymerschale gebildet ist, ist;
und der Lückenfüller aus einer fazialen Wand (132) und einer lingualen Wand (133) der Polymerschale (12) besteht, die zusammengeschmolzen sind, sodass sie einen wenigstens teilweise festen Übergang bilden.

2. Ein System wie in Anspruch 1 beansprucht, wobei die orthodontische Komponente von der Gruppe aus Rohren (14), Lippenblöcken (30) oder Bumpern, bukkalen Schilden (34), Wangenmuskelbögen (36), oder Drahtschilden, Klammern (18), Haken (50), Knöpfen (20), Federn (60), palatalen Streifen (70), Stab-und-Röhre-Vorrichtungen (40) und behüllten Federn (48) ausgewählt ist.

3. Ein System wie in Anspruch 1 beansprucht, wobei die Oberfläche des weichen Gewebes gewählt ist von der Gruppe: Gaumen, Wangen, Lippen, Zunge, und Zahnfleisch.

4. Ein System wie in Anspruch 1 beansprucht, wobei die orthodontische Komponente, die in oder integral mit einer Wand der Schale gebildet ist, einen Teil einer Wand der Schale bildet.

5. Ein System wie in Anspruch 1 beansprucht, wobei die orthodontische Komponente, die in oder integral mit einer Wand der Schale gebildet ist, aus einer externen Oberfläche der Schale herausragt.

6. Ein System wie in Anspruch 1 beansprucht, wobei die orthodontische Komponente, die in oder integral mit einer Wand der Schale gebildet ist, mit der Schale verblockt ist.

7. Ein System wie in Anspruch 1 beansprucht, wobei die orthodontische Komponente, die in oder integral mit einer Wand der Schale gebildet ist, ausgebildet ist, mit einem orthodontischen Gerät gewählt aus der Gruppe von Headgear, elastischen Bändern, Ligaturen, Federn, Klammern, Befestigungsgeräte und elastische Repositionierungsvorrichtungen verbunden zu werden.

8. Ein System wie in Anspruch 1 beansprucht, wobei die integrale orthodontische Komponente einen hinteren Vorsprung umfasst, wobei der hintere Vorsprung eine Verdickung der Schale entlang einer Seitenzahnrichtung in einer Seitenzahnbissregion umfasst, wobei der hintere Vorsprung in Verwendung durch die herausnehmenbare Positionierungsvorrichtung über der Kaufläche von Seitenzähnen positioniert ist, um anteriore Öffnung zu liefern.

9. Ein System wie in Anspruch 1 beansprucht, wobei die orthodontische Komponente, die in oder integral mit einer Wand der Schale gebildet ist, ausgebildet ist, Kräfte auf einen oder mehrere Zähne zu übertragen, um das Repositionieren dieser Zähne von einer ersten Anordnung zu einer nachfolgenden Anordnung zu unterstützen.

10. Ein System wie in einem der vorangegangenen Ansprüche beansprucht, wobei das System wenigstens drei elastische Repositionierungsvorrichtungen umfasst.

11. Ein System wie in Anspruch 1, wobei ein Lückenfüller eine Kavität (122) in der Form von wenigstens einem Teil eines Zahns, eines dentalen Merkmals, einer Kugel, eines Ovals, oder eines dreidimensionalen gekrümmten und/oder flachseitigen Objekts ist.

12. Ein System wie in Anspruch 11, wobei der Lückenfüller wenigstens teilweise undurchsichtig ist.

13. Ein System wie in Anspruch 12, wobei die Deckfähigkeit ein Effekt einer Oberflächenbehandlung des Lückenfüllers ist.

14. Ein System wie in Anspruch 1, wobei die Struktur (135) geriffelt ist.

15. Ein System wie in Anspruch 1 beansprucht, wobei jede der herausnehmbaren dentalen Positionierungsvorrichtungen umfasst:
eine Vielzahl von Polymerschalen umfassend Kavitäten, die geformt sind, Zähne aufzunehmen und von einer ersten Anordnung zu einer nachfolgenden Anordnung zu repositionieren, und wobei wenigstens einige der Schalen wenigstens eine Öffnung (150) aufweisen, um wenigstens einen Teil einer Kauffläche des aufgenommenen Zahns freizulegen.

16. Ein System wie in Anspruch 15, wobei die Schalen eine Vielzahl von Öffnungen (150) aufweisen, die eine Größe besitzen, die ein Ineinandergreifen oberer und unterer Zähne erlaubt.

## Revendications

1. Système d'appareils de positionnement dentaire élastiques amovibles (10) directement montables en utilisation sur un ensemble de dents, ledit système comprenant:
une pluralité d'appareils à coque polymère, dont au moins certains incluent au moins un composant orthodontique (14, 16, 18, 20, 22, 30, 34, 36, 40, 48, 50, 60, 70, 71, 80, 82, 84, 90, 92) formé dans une paroi de l'appareil à coque ou intégralement avec celle-ci ;
dans lequel chaque appareil (10) est conformé pour recevoir et repositionner des dents d'une première orientation à une orientation successive, et la composante (14, 16, 18, 20, 22, 30, 34, 36, 40, 48, 50, 60, 70, 71, 80, 82, 84, 90, 92) formée dans ou par une paroi de l'appareil à coque est conformée pour interagir avec une surface de tissu mou ou un dispositif orthodontique ;
au moins un des appareils (10) incluant une coque polymère (12) comportant des cavités conformées pour recevoir et repositionner des dents d'une première orientation à une orientation successive, et incluant en outre au moins un élément de remplissage d'espace conformé pour s'aligner avec un intervalle (120) entre desdites dents adjacentes ;
**caractérisé en ce que** l'élément de remplissage d'espace est une structure (130, 135) formée entre deux cavités dans la coque polymère ;
et l'élément de remplissage d'espace est constitué d'une paroi faciale (132) et d'une paroi linguale (133) de la coque polymère (12) qui sont fusionnées pour former un pont au moins partiellement solide.

2. Système selon la revendication 1, dans lequel ledit composant orthodontique est sélectionné parmi le groupe constitué par des tubes (14), des blocs ou tampons labiaux (30), des boucliers buccaux (34), des boucliers en fil ou arcs bucinateurs (36), des boîtiers (18), des crochets (50), des boutons (20), des ressorts (60), des barres palatales (70), des structures, des appareils à broche et tube (40) et des ressorts recouverts d'une gaine (48).

3. Système selon la revendication 1, dans lequel ladite surface de tissu mou est sélectionnée parmi le groupe constitué par : le palais, les joues, les lèvres, la langue et les gencives.

4. Système selon la revendication 1, dans lequel le composant orthodontique formé dans une paroi de la coque ou intégralement avec celle-ci forme une portion de paroi de la coque.

5. Système selon la revendication 1, dans lequel le composant orthodontique formé dans une paroi de la coque ou intégralement avec celle-ci ressort d'une surface externe de la coque.

6. Système selon la revendication 1, dans lequel le composant orthodontique formé dans une paroi de la coque ou intégralement avec celle-ci est intégré avec la coque.

7. Système selon la revendication 1, dans lequel le composant orthodontique formé dans une paroi de la coque ou intégralement avec celle-ci est adapté pour se coupler à un dispositif orthodontique sélectionné parmi le groupe constitué par les appareils de traction extraorale, les bandes élastiques, les ligatures, les ressorts, les boîtiers, les dispositifs de fixation et les appareils de repositionnement élastiques.

8. Système selon la revendication 1, dans lequel le composant orthodontique intégral comprend une protubérance postérieure, ladite protubérance postérieure comprenant une augmentation d'épaisseur de la coque selon une direction postérieure dans une région occlusale postérieure, ladite protubérance postérieure étant, en utilisation, positionnée par l'appareil de positionnement amovible par-dessus des surfaces occlusives des dents postérieures pour procurer une disclusion antérieure.

9. Système selon la revendication 1, dans lequel le composant orthodontique formé dans une paroi de la coque ou intégralement avec celle-ci est adapté pour transmettre une force à une ou plusieurs dents pour aider à repositionner lesdites dents d'un premier agencement à un agencement successif.

10. Système selon l'une quelconque des revendications précédentes, dans lequel le système comprend au moins trois appareils de repositionnement élastiques.

11. Système selon la revendication 1, dans lequel un élément de remplissage d'espace est une cavité (122) en forme d'au moins une portion d'une dent, d'un élément dentaire, de sphère, d'ovale, ou d'un objet tridimensionnel incurvé et/ou à côté plat.

12. Système selon la revendication 11, dans lequel l'élément de remplissage d'espace est au moins partiellement opaque.

13. Système selon la revendication 12, dans lequel l'opacité est un effet de traitement de surface de l'élément de remplissage d'espace.

14. Système selon la revendication 1, dans lequel la structure (135) est ondulée.

15. Système selon la revendication 1, dans lequel chacun desdits appareils de positionnement dentaire amovibles comprend:
une pluralité de coques polymères comportant des cavités conformées pour recevoir et repositionner des dents d'une première orientation à une orientation successive, et dans lequel au moins certaines des coques comportent au moins une fenêtre (150) pour exposer au moins une portion d'une surface occlusale d'une dent reçue.

16. Système selon la revendication 15, dans lequel les coques comportent une pluralité de fenêtres (150) qui sont dimensionnées pour permettre l'entrecroisement de dents supérieures et inférieures.
